# EUROPEAN PATENT APPLICATION

(11) **EP 0 741 363 A1**
(43) Date of publication of application: **06.11.1996**
(21) Application number: 96200873.6
(22) Date of filing: 09.04.1996
(51) Int. Cl.: G06F 17/30

(54) **A system for projecting data on a screen, said data being chosen from a number of data recorded in a database**

(30) Priority: 12.04.1995 NL 1000125
(71) Applicant: Marketrieve B.V., 2132 HB Hoofddorp (NL)
(72) Inventor: Hagemans, Conrad, 2132 ZJ Hoofddorp (NL)
(74) Representative: Lips, Hendrik Jan George, Ir.

(57) **Abstract**

1. A system for projecting data on a screen (5,6,7), said data being chosen from a number of data recorded in a database (8,12), in which between the memory and the screen (5,6,7) a compiler (4), or "translator" or software generator" and a screen-designer (1,2,3) are incorporated in such a way that, without programming, one can project on the screen (5,6,7), or might record in the database, the wanted data only. In this case each item (14,15, etc.) is taken up into a separate record and the items which substantially belong to each other are related to each other.

## Description

The invention relates to a system for projecting data on a screen, said data being chosen from a number of data recorded in a database.

In nearly all businesses as well as in case of privat persons data of customers, suppliers and such like are recorded in the memory of a computer. In case of the known system these data can only be projected on a screen in the way as they were initially recorded in said database.

So with such a known management system "fixed" screens are present with a fixed layout of said screen. This means that all users of the system always are working with the same screen, regardless of the function, the method or the objective.

When in that case e.g. it concerns the name of a business delivering certain services or products, together with the name of said business there are recorded the kind of said business, the adress with postage-code, the place of business, the telephone and facsimile number, the name of the person to be contacted in said business, etcetera.

When now the data of said business are wanted or when one wants to bring typed data into the database, all recorded data will be shown on the screen, although in most cases one does not need all these data. This e.g. can be the case when one only wants to know the telephone number of the business.

Now the object of the invention is to remove this disadvantage and to that end it is provided that between the database and the screen a compiler, or "translator" or software-generator" and a screen-designer are incorporated in such a way that, without programming, one can project on the screen, or might record in the database, the wanted data only.

In case of the known system of data recording in a database use is made of a table with "records" in which each record is divided into "items". So e.g. the record A is divided into the items 1, 2, 3 and 4 which are arranged one after the other. The same can be done with a record B etc.

In case of the system according to the invention now each item is taken up into a separate record and the items which substantially belong to each other are related to each other.

So e.g. to a first item 1, belonging to a given record A, a "value 1" can be attached, to a next item 2, as well belonging to said record A, a "value 2", etc. For items belonging to record B the same can be done.

So now one can reguest e.g. for item 2 of one or more records so that on the screen only given data of the related business or of the related businesses are shown and not all other data which are not relevant at that moment.

The invention is made clear by means of the drawing, in which:
Fig. 1 shows the system of the apparatus necessary for applying the present invention;
Fig. 2A shows the relation between data recorded in the known way, and
Fig. 2B recorded in the way according to the invention;
Fig. 3A shows the recording of data in a database in the known way, and
Fig. 3B in the way according to the invention; and
Fig. 4 shows the way in which, when applying the invention, connections can be made between various data.

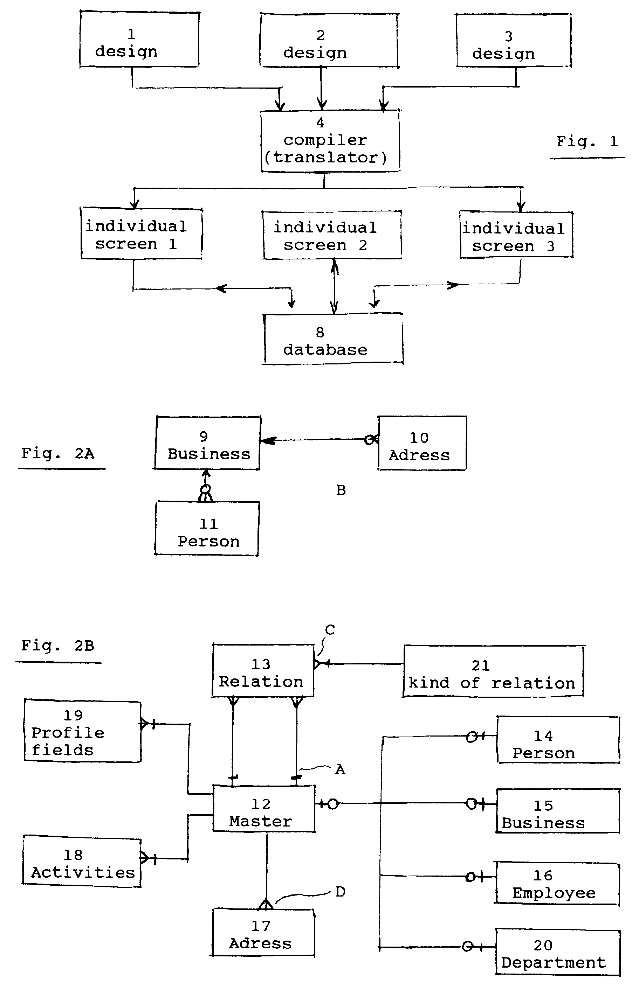

Fig. 1 shows the designs 1, 2 and 3, being connected to the compiler 4 for showing the desired data on the individual screens 5, 6 and 7, said data being recorded in the database 8. So the screens 5, 6 and 7 each may show a totally other image dependent on what the user of the related screen wants to know. Obviously more than three designs and screens can be present.

Fig. 2A shows the way in which data are recorded in a database in the known way. So e.g. to a business 9 the adress 10 may belong, a person 11 and much other not further indicated data, all being coupled with said business. When the data of said business are wanted all recorded data are shown.

Now Fig. 2B shows the way in which data are recorded according to the present invention. In this case use is made of a so called "master" 12, coupled with the "relation" 13 a number of data of which are recorded, such as the person 14, the business 15, the employee 16, the adress 17, the activities 18, the profile fields 19 and the department 20. With the "relation" 13 the kind of relation 21 is connected.

In the figures 2A and 2B given signs are used to indicate the mutual connections. So A means: obliged single connection; B optional one or more connections; C obliged one or more connections and D more than one connection.

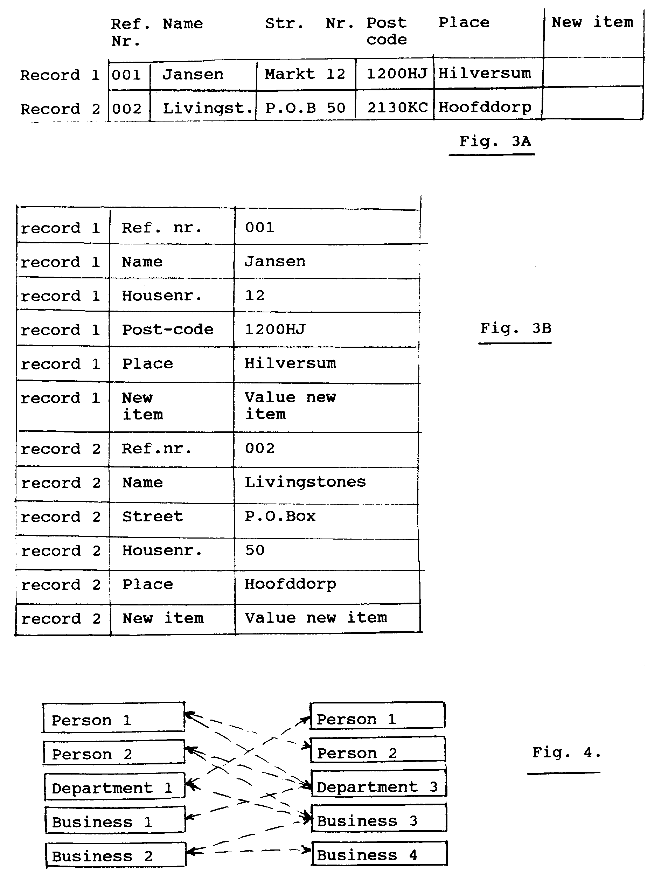

Fig. 3A shows the way in which data are recorded in the known way. A number of data belongs to "record 1", as well as to "record 2" etc. When in this case a new item has to be added all data has to be obtained from the database, said item has to be added while adapting the program, and all data has to be recorded in the database again. During these activities the database cannot be used.

When use is made of the way of recording data according to the invention, as this is shown in fig. 3B, each desired number of items can be added without changing the program and without interruption in the use of the database.

Further more connections can be applied between the data recorded in the database. This is schematically indicated in fig. 4.

Obviously only some possibilities of the system according to the invention are shown in the drawing and are described above and many modifications can be applied without leaving the inventive concept as described in the claims.

## Claims

1. A system for projecting data on a screen (5,6,7), said data being chosen from a number of data recorded in a database (8,12), **characterized in that** between the database and the screen (5,6,7) a compiler (4), or "translator" or software-generator" and a screen-designer (1,2,3) are incorporated in such a way that, without programming, one can project on the screen (5,6,7), or might record in the database, the wanted data only.

2. A system according to claim 1, **characterized in that** each item (14,15, etc.) is taken up into a separate record and the items which substantially belong to each other are related to each other.
